# EUROPEAN PATENT SPECIFICATION

(11) **EP 2 072 301 B1**
(45) Date of publication and mention of the grant of the patent: **07.07.2010**
(21) Application number: 07123648.3
(22) Date of filing: 19.12.2007
(51) Int. Cl.: B60J 5/04

(54) **Vehicle door module and method of assembling thereof**
Fahrzeugtürmodul und Verfahren zu seiner Montage
Module de portière de véhicule et procédé d'assemblage de celle-ci

(43) Date of publication of application: 24.06.2009
(73) Proprietor: Faurecia Innenraumsysteme GmbH, 76767 Hagenbach (DE)
(72) Inventor: Porras, Ramon, Sant Feliu de Llobregat, 08980 Barcelona (ES)
(74) Representative: Richardt, Markus Albert

(56) References cited:
- US-A1- 2007 056 220

## Description

### Technical field

The invention relates to the field of vehicle doors. More particularly the present invention relates to the field of door modules and a method for assembling door modules.

### Background and related art

Injection molding is a technique for making parts as e.g. thermoplastic materials in production and is widely used for manufacturing a variety of mold parts, including parts of cars. Molten material is injected at high pressure into a mold. Mold is a common term that describes the production tool used to produces the parts in injection molding. US 2007/0 056 220 A1 describes such an integrated door module assembly.

Injection molding machines, also knows as presses, hold the molds in which components are shaped. Presses are rated by tonnage, expressing the amount of clamping force that the machine can generate. The pressure keeps the mold closed during the injection process until the part has been formed. The parts to be molded may include components of vehicles doors, such as door modules.

Vehicle doors are generally formed of a support structure made of a molding material. Another component of vehicle doors is a latch, which temporarily fixes the door to the vehicle body. As a part of the assembly process, a latch support is required to hold the latch in the support structure before is finally assembled or mounted into the vehicle door. These components typically require different manufacturing steps before they are all fixed into the vehicle door.

There is therefore a need for an improved method for assembling a door module and for an improved door module.

### Summary of the invention

The present invention provides a door module comprising a support structure with a mounting opening, wherein the support structure is adapted for being mounted into a vehicle door; the latch support is connected to the support structure with a hinge, the hinge being adapted for rotating the latch support from a first position to a second position, the first position being in the mounting opening; at least one clip in the support structure, the clip being adapted for holding the latch support and the second position. The support structure, the latch support and the clip form a single mold part. The mold part may be, for example, a thermoplastic or thermosetting plastic material. The hinge is a thinner profile than the rest of the mold part and it allows folding the latch support from the first position to the second position. The hinge can be made of a plastic film hinge.

The latch support in the second position is adapted for supporting a latch. The second position is located between the mounting opening and a latch of the support structure. The hinge is located at an edge of the mounting opening and the clip is located between the hinge and an edge of the support structure. The clip in the support structure is constructed in a way that holds the latch support with the latch attached to it.

The door module advantageously includes a support structure with a latch support attached to it with a hinge. The latch support forms a single mold part with the support structure by using the space available in the mounting opening. The improved door module includes a latch support, that otherwise would require to be manufactured in a separated process than the one used for the support structure. Through the hinge that connects the latch support and the support structure, all belonging to the same mold part, the latch support is rotated to a second position that includes at least one clip, so that the latch support is clipped and fixed into this second position adapted for holding the latch until the latch is finally assembled to the vehicle door.

In another aspect, the invention relates to a method of assembling a door module, comprising the steps of: providing a door module comprising: support structure with mounting opening, a latch support connected to the support structure with a hinge, at least one clip in the support structure; rotating the latch support around a hinge axis from a first position to a second position; clipping the latch support into the second position with at least one clip.

The method may further comprise the step of measuring the support structure comprising the latch support and the clip or clips with a gauge. Further possible steps comprise mounting a latch into the latch support, mounting the support structure into a vehicle door, and screwing the latch into the vehicle door.

The improved method for assembling a door module has the advantage of allowing the use of a single mold for the support structure including the latch support. In a single step, an injection molding machine molds these elements without requiring a separate mold for the latch support. During the measuring process of the molded form, only a single gauge is required to measure the dimensions of the form, without requiring a different gauge for the latch support alone. This improved method has also the advantage of simplifying the manufacturing and assembling method and saving costs by using a single mold, a single measurement step and gauge, and a simple rotation process to fix the latch support into the required position for receiving the latch, reducing as well the manufacturing and assembly time

### Brief description of the drawings

In the following preferred embodiments of the invention are described in greater detail by way of example only making reference to the drawings in which:
- Figure 1: shows a door module in accordance with an embodiment of the invention,
- Figure 2: shows a second door module in accordance with an embodiment of the invention,
- Figure 3: shows a first block diagram in accordance with an embodiment of the invention.
- Figure 4: shows a second block diagram in accordance with an embodiment of the invention.

### Detailed description

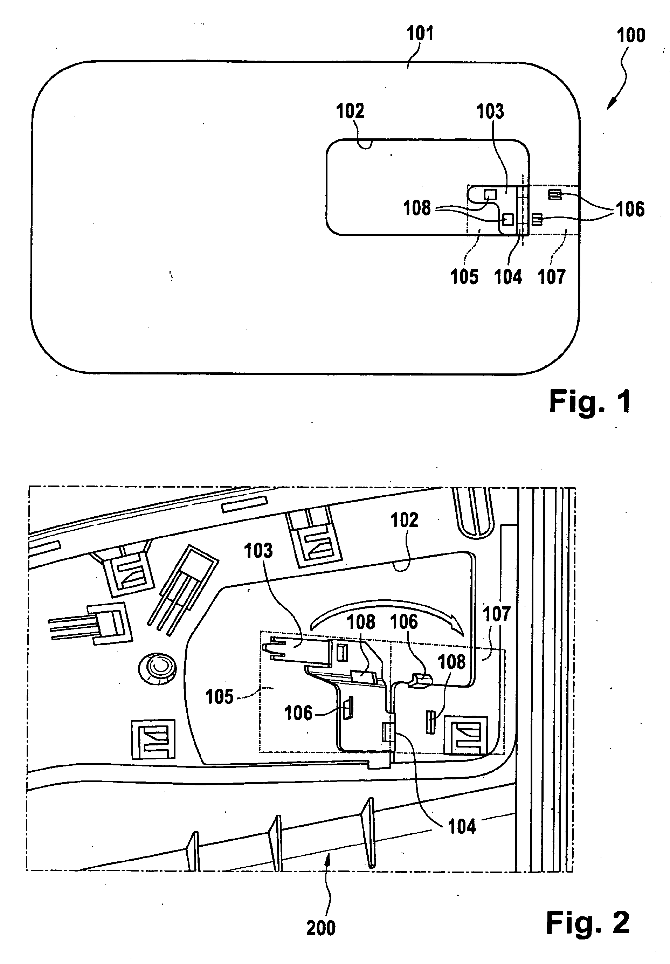

Fig. 1 shows a door module 100 comprising a support structure 101 with a mounting opening 102. The door module 100 further comprises a latch support 103 attached to the support structure 101 with a hinge 104; the latch support 103 is located at a first position 105 and two clips 106 located at a second position 107 to clip the latch support 103 at the second position 107.

The plastic structure 100 is adapted for being mounted into a vehicle door and the hinge 104 is used to allow the rotation of the latch support 103 from the first position 105 to the second position 107. The latch support 103 may include some holes 108 for being clipped into the clips 106. The hinge is located at an edge of the mounting opening 102 and the latch support in the first position is located within the mounting opening 102. The latch support 108 after it has been clipped into the second position 107 is adapted for receiving and holding a latch, after which can be screwed or fixed into the vehicle door.

Fig. 2 shows a portion of the door module 200 including the mounting opening 102, the latch support 103, the hinge 104, the first position 105, the clips 106 located in the second position 107. The latch support 103 includes one clip and one hole that are adapted to fix the latch support in the second position. The second position 107 also includes a clip and a hole.

The door module is formed by a single mold part that includes the support structure 102, the latch support 103 and the hinge 104. The latch support is shown in its first position 105, which corresponds to the original location after the molding has been completed. The hinge 104 allows a rotation of the latch support from the first position 105 to the second position 107 and using the clips and the holes to fix the latch support into the second position 107. Once the latch support 103 has been clipped into the second position 107, the support is able to hold the latch until it has been finally screwed into the vehicle door. Different positions for the clips and the holes in the latch support and in the second position are possible, depending on the type of door, the type of latch, the weight of the latch or any other characteristics of the door module and the latch.

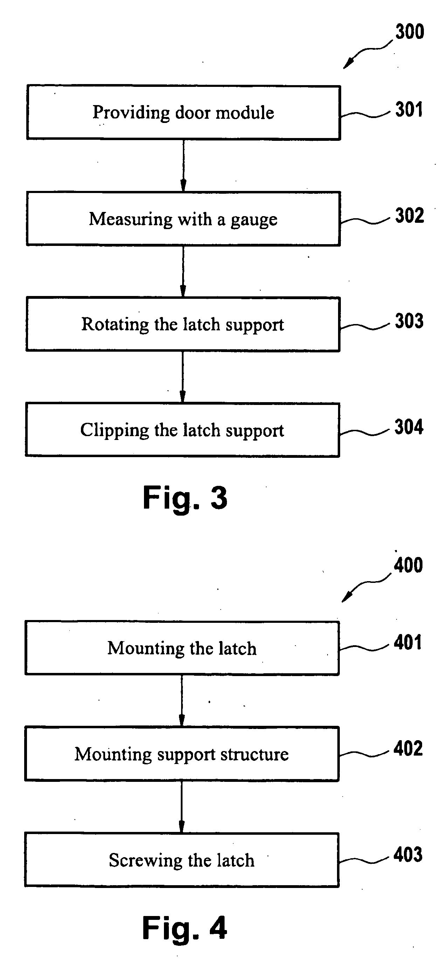

Fig. 3 shows a block diagram 300 describing the steps of the assembly method according to an embodiment of the invention. The first step of the method of assembling a door module comprises providing the door module 301, after the injection molding machine has injected the element of the plastic into the mold and the mold part has been formed. In the second step 302, the door module including the support structure, the latch support and the clips is measured with a gauge. The measurement compares the dimensions of the door module obtained from the mold part with the wished dimensions or the theoretical dimensions of the door modules. In the third step 303, the latch support 103 is rotated from the first position 105 to the second position 107. The first position corresponds to the original position of the latch support after the molding process has been completed. The last step 304 clips the latch support 103 into the second position 107 using the available clips 106. The clips 106 may be located into the second position 107 and/or into the latch support 103.

Fig. 4 shows a block diagram 400 describing the steps of the assembly method according to an embodiment of the invention, after the latch support has been clipped into the second position. In the first step 401, the latch is mounted into the latch support after the latch support has been clipped into the second position. In the step 402, the support structure, including the latch, is mounted in the support structure. The latch support holds the latch until in step 403 is finally screwed into the vehicle door. The vehicle door is typically made of a metal material.

The assembly method, as described in one of the embodiments of the invention, shows a simplified and improved method of assembling the latch into a door module, in which the latch support 103 does not require to be molded using a different molding process, as it has been included in the molding process of the door module by using the available space within the mounting opening 102. Also, a further measurement step has been saved, as it is not required to measure the separate latch support, included within the door module. As the latch support only requires holding the latch until it has been finally screwed into the vehicle door, the design characteristics of the latch support, the clips and the holes may get adapted to the different design types of the different door modules, so that it can be included in any vehicle door.

### List of Reference Numerals

- 100: door module
- 101: support structure
- 102: mounting opening
- 103: latch support
- 104: hinge
- 105: first position
- 106: clips
- 107: second position
- 108: holes for the clips
- 200: door module
- 300: block diagram
- 301: providing door module
- 302: measuring with a gauge
- 303: rotating the latch support
- 400: block diagram
- 401: clipping the latch support
- 402: mounting support structure
- 403: screwing the latch

## Claims

1. A door module (100), comprising:
a support structure (101) with a mounting opening (102), wherein said support structure (101) is adapted for being mounted into a vehicle door;
a latch support (103) connected to said support structure (101) with a hinge (104), said hinge (104) being adapted for rotating said latch support (103) from a first position (105) to a second position (107), said first position (105) being in said mounting opening (102);
at least one clip (106) in said support structure (101), said clip (106) being
adapted for holding said latch support (103) in said second position (107), **characterized in that** said support structure (101), said latch support (103) and said clip (106) form a single mold part.

2. A door module as in claim 1, wherein said latch support (103) in said second position (107) is adapted for supporting a latch.

3. A door module (100) as in claim 1, wherein said second position (107) is located between said mounting opening (102) and an edge of said support structure (101).

4. A door module (100) as in claim 1, wherein said hinge (104) is located at an edge of said mounting opening (102).

5. A door module (100) as in claim 1, wherein said clip (106) is located between said hinge (104) and an edge of said support structure (101).

6. A door module (100) as in claim 1, wherein at least said clip (106) in said support structure is adapted for holding said latch support (103) with said latch.

7. A door module (100) as in claim 1, wherein said hinge (104) is a film hinge and is made of a plastic material.

8. A method of assembling a door module, comprising the steps of:
- providing a door module comprising:
a support structure (101) with a mounting opening (102),
a latch support (103) molded to said support structure (101) with a hinge (104),
at least one clip (106) in said support structure (101);
- rotating said latch support (103) around a hinge axis from a first position (105) to a second position (107);
- clipping said latch support (103) into said second position (107) with at least said clip (106).

9. A method as in claim 8, said method further comprises:
- measuring said support structure (101) comprising said latch support (103) and said clip (106) with a gauge.

10. A method as in claim 8, said method further comprises:
- mounting a latch into said latch support (103);
- mounting said support structure (101) into a vehicle door.

11. A method as in claim 10, said method further comprises:
- screwing said latch into said vehicle door.

## Patentansprüche

1. Türmodul (100) mit
einer Stützstruktur (101) mit einer Montageöffnung (102), wobei die Stützstruktur (101) geeignet ist, in eine Fahrzeugtür montiert zu werden,
einer Fallenstütze (103), die über ein Scharnier (104) mit der Stützstruktur (101) verbunden ist, wobei das Scharnier (104) geeignet ist, die Fallenstütze (103) aus einer ersten Position (105) in eine zweite Position (107) zu drehen, wobei sich die erste Position (105) in der Montageöffnung (102) befindet, und
mindestens einem Clip (106) in der Stützstruktur (101), der geeignet ist, die Fallenstütze (103) in der zweiten Position (107) zu halten,
**dadurch gekennzeichnet, dass** die Stützstruktur (101), die Fallenstütze (103) und der Clip (106) ein einziges Formteil bilden.

2. Türmodul nach Anspruch 1, wobei die Fallenstütze (103) in der zweiten Position (107) geeignet ist, eine Falle zu stützen.

3. Türmodul (100) nach Anspruch 1, wobei sich die zweite Position (107) zwischen der Montageöffnung (102) und einem Rand der Stützstruktur (101) befindet.

4. Türmodul (100) nach Anspruch 1, wobei das Scharnier (104) an einem Rand der Montageöffnung (102) angeordnet ist.

5. Türmodul (100) nach Anspruch 1, wobei der Clip (106) zwischen dem Scharnier (104) und einem Rand der Stützstruktur (101) angeordnet ist.

6. Türmodul (100) nach Anspruch 1, wobei mindestens der Clip (106) in der Stützstruktur geeignet ist, die Fallenstütze (103) an der Falle zu halten.

7. Türmodul (100) nach Anspruch 1, wobei das Scharnier (104) ein Filmscharnier ist und aus einem Kunststoffmaterial hergestellt ist.

8. Verfahren zur Montage eines Türmoduls mit folgenden Schritten:
- Bereitstellen eines Türmoduls mit einer Stützstruktur (101) mit einer Montageöffnung (102),
einer Fallenstütze (103), die mit einem Scharnier (104) an die Stützstruktur (101) angeformt ist, und
mindestens einem Clip (106) in der Stützstruktur (101),
- Drehen der Fallenstütze (103) um eine Scharnierachse aus einer ersten Position (105) in eine zweite Position (107) und
- Einrasten der Fallenstütze (103) in die zweite Position (107) mit mindestens dem Clip (106).

9. Verfahren nach Anspruch 8, wobei das Verfahren ferner Folgendes umfasst:
- Messen der Stützstruktur (101), die die Fallenstütze (103) und den Clip (106) umfasst, mit einer Messlehre.

10. Verfahren nach Anspruch 8, wobei das Verfahren ferner Folgendes umfasst:
- Montieren einer Falle in die Fallenstütze (103) und
- Montieren der Stützstruktur (101) in eine Fahrzeugtür.

11. Verfahren nach Anspruch 10, wobei das Verfahren ferner Folgendes umfasst:
- Einschrauben der Falle in die Fahrzeugtür.

## Revendications

1. Module de porte (100), comprenant :
une structure support (101) avec une ouverture de montage (102), dans laquelle ladite structure support (101) est apte à être montée dans une porte de véhicule,
un support de verrouillage (103) relié à ladite structure support (101) par une charnière (104), ladite charnière (104) étant apte à faire tourner ledit support de verrouillage (103) d'une première position (105) à une seconde position (107), ladite première position (105) se trouvant dans ladite ouverture de montage (102),
au moins une fixation à ressort (106) dans ladite structure support (101), ladite fixation à ressort (106) étant apte à maintenir ledit support de verrouillage (103) dans ladite seconde position (107), **caractérisé en ce que** ladite structure support (101), ledit support de verrouillage (103) et ladite fixation à ressort (106) forment une seule pièce moulée.

2. Module de porte (100) selon la revendication 1, dans lequel ledit support de verrouillage (103) dans ladite seconde position (107) est apte à soutenir un verro.

3. Module de porte (100) selon la revendication 1, dans lequel ladite seconde position (107) est située entre ladite ouverture de montage (102) et un bord de ladite structure support (101).

4. Module de porte (100) selon la revendication 1, dans lequel ladite charnière (104) est située à un bord de ladite ouverture de montage (102).

5. Module de porte (100) selon la revendication 1, dans lequel ladite fixation à ressort (106) est située entre ladite charnière (104) et un bord de ladite structure support (101).

6. Module de porte (100) selon la revendication 1, dans lequel ladite fixation à ressort (106) dans ladite structure support (101) est apte à maintenir ledit support de verrouillage (103) avec ledit verrou.

7. Module de porte (100) selon la revendication 1, dans lequel ladite charnière (104) est une charnière en forme de feuille mince en matière plastique.

8. Procédé d'assemblage d'un module de porte, comprenant les étapes consistant à :
- fournir un module de porte comprenant :
une structure support (101) avec une ouverture de montage (102),
un support de verrouillage (103) moulé sur ladite structure support (101) avec une charnière (104),
au moins une fixation à ressort (106) dans ladite structure support (101) ;
- faire tourner ledit support de verrouillage (103) d'une première position (105) à une seconde position (107) ;
- fixer ledit support de verrouillage (103) dans ladite seconde position (107) avec au moins ladite fixation à ressort (106).

9. Procédé selon la revendication 8, comprenant en outre l'opération consistant à :
- mesurer ladite structure support (101) comprenant ledit support de verrouillage (103) et ladite fixation à ressort (106) avec un gabarit.

10. Procédé selon la revendication 8, comprenant en outre les étapes consistant à :
- monter un verrou dans ledit support de verrouillage (103) ;
- monter ladite structure support (101) dans une porte de véhicule.

11. Procédé selon la revendication 10, comprenant en outre l'opération consistant à :
- visser ledit verrou dans ladite porte de véhicule.
